# EUROPEAN PATENT SPECIFICATION

(11) **EP 4 713 279 B1**
(45) Date of publication and mention of the grant of the patent: **07.10.2026**
(21) Application number: 24725862.7
(22) Date of filing: 13.05.2024
(51) Int. Cl.: B66B 1/34

(54) **A METHOD AND AN ABSOLUTE POSITION MEASURING SYSTEM FOR DETERMINING AN ABSOLUTE POSITION OF AN ELEVATOR CAR OF AN ELEVATOR SYSTEM**
VERFAHREN UND ABSOLUTES POSITIONSMESSSYSTEM ZUR BESTIMMUNG EINER ABSOLUTEN POSITION EINER AUFZUGSKABINE EINES AUFZUGSSYSTEMS
PROCÉDÉ ET DISPOSITIF DE MESURE DE POSITION ABSOLUE POUR LA DÉTERMINATION D'UNE POSITION ABSOLUE D'UNE CABINE D'ASCENSEUR

(30) Priority: 16.05.2023 EP 23173534
(43) Date of publication of application: 25.03.2026
(73) Proprietor: INVENTIO AG, 6052 Hergiswil (CH)
(72) Inventor: LUSTENBERGER, Ivo, 6018 Buttisholz (CH); BIRRER, Eric, 6033 Buchrain (CH)
(74) Representative: Inventio AG
(86) International application number: PCT/EP2024/063022
(87) International publication number: WO 2024/235890

(56) References cited:
- JP-A- 2022 039 414
- US-A- 5 821 477
- US-A1- 2021 032 077
- US-B2- 10 577 220

## Description

### TECHNICAL FIELD

This disclosure relates to a method for determining an absolute position of an elevator car, to an absolute position measuring system for a passenger transportation system and to such a passenger transportation system.

### BACKGROUND

An absolute position measuring system may be used to determine an absolute position for a passenger transportation system, in particular for an elevator system. For example, an absolute position of an elevator car can be determined using the absolute position measuring system. The absolute position of the elevator car may be the absolute position within an elevator shaft of the elevator system such that, e.g., the elevator car can be controlled to stop at a predetermined level, for example such that an elevator floor is at an aligned position with respect to the floor of the predetermined level.

Usually, a coded magnetic tape is, e.g., arranged vertically within the elevator shaft and hall-sensors are arranged at the elevator car to read a magnetic code of the coded magnetic tape to determine the absolute position of the elevator car. For example, the document WO 03/011733 A1 relates to such a magnetic absolute position measuring system. Relevant absolute position measuring systems are known from US 5 821 477 A and US 10,577,220 B2.

It is further known to replace the magnetic code by an optical code and the hall-sensors by image sensors to reduce costs. However, an accuracy of the absolute position using the image sensors is lower than the accuracy obtained by the magnetic absolute position measuring system using the hall-sensors and the coded magnetic tape.

The absolute position measuring system may be a safety critical component of the passenger transportation system since the absolute position measuring system includes safety functions. For example, a speed of the elevator car may be determined and monitored. It is therefore desirable for the sensor to be reliable and accurate.

### SUMMARY

Aspects and advantages of the disclosure will be set forth in part in the following description, or may be obvious from the description, or may be learned through practice of the disclosure.

The present disclosure provides a method for determining an absolute position of an elevator car of an elevator system using an image sensor and a barcode, an absolute position measuring system for determining an absolute position of an elevator car of an elevator system, in particular for a passenger elevator system, and an elevator system, in particular a passenger elevator system, having such an absolute position measuring system for increasing an accuracy in the determination of the position and for reducing costs of the absolute position measuring system and of the elevator system.

In one aspect, the disclosure provides a method for determining an absolute position of an elevator car of an elevator system using an image sensor having a plurality of pixels being arranged along a height direction and each pixel of the plurality of pixels having a pixel height, and a barcode having a bar extending lengthwise, perpendicular to the height direction, and having a lengthwise edge, the bar having a bar width in the height direction. The bar width is larger than the pixel height. The method includes the steps of scanning the barcode by the image sensor, identifying a degree of coverage for an edge pixel of the plurality of pixels, the lengthwise edge of the bar being imaged onto the edge pixel, and determining a relative position from the image sensor to the lengthwise edge of the bar by using the degree of coverage of the edge pixel.

In another aspect, the disclosure provides an absolute position measuring system for determining an absolute position of an elevator car of an elevator system, in particular for a passenger elevator system. The absolute position measuring system has an image sensor having a plurality of pixels being arranged in a height direction and each pixel of the plurality of pixels having a pixel height, and a tape having a barcode with a bar extending lengthwise perpendicular to the height direction, and having a lengthwise edge, the bar having a bar width in the height direction. The bar width is larger than the pixel height. The image sensor is arranged movably along the tape and is configured for scanning the barcode. The position measuring system is configured for identifying a degree of coverage for an edge pixel of the plurality of pixels (110), the lengthwise edge of the bar being imaged onto the edge pixel, and for determining a relative position from the image sensor to the lengthwise edge of the bar using the degree of coverage of the edge pixel.

In yet another aspect, the disclosure provides an elevator system, in particular a passenger elevator system, having such an absolute position measuring system.

The details of one or more aspects of the disclosure are set forth in the accompanying drawings and the description below. Other features, objects, and advantages of the techniques described in this disclosure will be apparent from the description and drawings, and from the claims.

### BRIEF DESCRIPTION OF DRAWINGS

A full and enabling disclosure of the present disclosure is set forth in the specification, which makes reference to the appended figures, in which:
FIG. 1 is a schematic view of a code having dark areas and light areas and an image sensor according to embodiments.
FIG. 2 is a schematic illustration of an output signal of a pixel of an image sensor scanning a code of dark areas and light areas according to embodiments.

### DETAILED DESCRIPTION

This disclosure generally relates to an absolute position measuring system for an elevator system, in particular for a passenger elevator system, which provides a high accuracy and robustness at reduced costs through the use of an interpolation scheme.

Furthermore, this disclosure relates to a method for determining an absolute position of an elevator car of an elevator system at a high accuracy, e.g. the position of the elevator car along a tape, using an image sensor and to an elevator system having the absolute position measuring system.

An absolute position measuring system for determining an absolute position of an elevator car of an elevator system comprises an image sensor having a plurality of pixels being arranged in a height direction and each pixel of the plurality of pixels having a pixel height. Further, the absolute position measuring system comprises a tape having a barcode with bars extending lengthwise, perpendicular to the height direction, and each bar having lengthwise edges, each bar having a bar width in the height direction, the bar width being larger than the pixel height. The image sensor is arranged on the car and movably along the tape. The image sensor according to this disclosure scans the barcode, identifies a degree of coverage for an edge pixel of the plurality of pixels, i.e. a pixel onto which the edge of the bar is imaged to and which edge pixel covers an edge of a bar of the barcode, in particular a mutual edge of a dark bar and a light bar. Further, the absolute position measuring system determines a relative position from the image sensor to the lengthwise edge of the bar using the degree of coverage of the edge pixel.

In some examples, an absolute position is determined by reading the barcode and adjusting the absolute position using the relative position. The barcode may be read by any known method, e.g. by using processing circuitry. The terms "relative position" and/or "absolute position", as used herein, refer typically to a position of an elevator car. More specifically, the relative position that is obtained may refer to a relative position between a reference point which is kinematically linked in a moving direction of the elevator car to the elevator car, such as any point on the image sensor, and an edge of a bar. The absolute position that may be obtained may similarly refer to an absolute position of the reference point. A resolution of the absolute position being determined by only reading the barcode may be limited to one pixel height. A resolution of the relative position may, e.g., be one hundredth of a pixel height or less, e.g., one thousandth of the pixel height or less. For example, the absolute position determined by reading the barcode may be adjusted by the relative position in order to obtain an increased accuracy in an absolute position determination.

Embodiments of this disclosure may particularly be suitable to be used in passenger transportation systems such as elevator systems. In particular, embodiments for this disclosure may be suitable for use in elevator systems for high buildings, e.g. for elevator cars that move at high speeds, such as at speeds of 3 m/s or more, in particular at speeds of 6 m/s or more, preferably at speeds of 9 m/s or more. Embodiments of this disclosure may further be suitable for use in elevator systems moving also in a, in particular partially, horizontal direction. However, for ease of description, hereinafter it is referred to passenger transportation systems, in particular elevator systems, more specifically to elevator cars, moving in the vertical direction.

In general, this disclosure describes a method for determining an absolute position of an elevator car at a high accuracy. As used herein, the term "position" may refer to a relative position to an edge of a bar of a barcode and/or to an absolute position of the elevator car.

An image sensor has a plurality of pixels being arranged along a height direction, each pixel has a pixel height. The plurality of pixels may be of the same size. The image sensor may be a linear image sensor such that the plurality of pixels may be arranged vertically stacked, i.e. in a line. As used herein, the term "vertically stacked" refers to a stacking in a moving direction of the elevator car. The image sensor may be a Complementary Metal-Oxide-Semiconductor (CMOS) sensor. Preferably, the image sensor may be configured to communicate measurement values by row and/or by line. In some examples, the image sensor may be an area sensor.

The position is determined using a barcode. The barcode is formed by a plurality of bars. Each bar extends lengthwise, perpendicular to the height direction, has a lengthwise edge and a bar width in the height direction. The barcode, that is each bar of the bar code, is typically oriented perpendicular to the moving direction of the elevator car. The bar width is larger than the pixel height. Typically, the barcode may include dark bars and light bars, in particular black bars and white bars. The black bars and white bars may be arranged adjacent to each other and/or a black bar may be adjacent to another black bar and/or a white bar may be adjacent to another white bar to constitute the barcode. Two bars being adjacent to each other share a mutual edge. One of the dark areas and the light areas might also have the color of a support material, such as the tape, carrying the code. The black bars, which are also referenced as dark bars, might have any suitable color. The same applies to the white bars, which are also referenced as light bars and might have any suitable color different from the color of the black bars. Further, in the following the black bars might also just be named bars due to the fact, that the white bars are formed by the support material in the area between the black bars.

The barcode is attached to a tape. The barcode may be stamped, lasered, drilled, glued and/or alike to/on the tape. Typically, the tape may be attached to a first vertical end portion of the passenger transportation system and to a second vertical end portion of the passenger transportation system, the second vertical end portion being located opposite to the first vertical end portion and vertically above the first vertical end portion. In embodiments, the tape may be integrated into other components of the passenger transportation system, such as, e.g., a guide or similar. According to embodiments, the barcode may directly be attached to other components of the passenger transportation system such that in those embodiments the other component of the passenger transportation system which carries the barcode is considered to be a tape according to this disclosure.

In embodiments, the tape may be made substantially of polypropylene (PP). Preferably, the tape is made substantially of polyethylene terephthalate (PET). Such embodiments may reduce costs since the material is inexpensive, robust and lightweight such that logistics and installation may be facilitated. Further, the mechanical properties of PET-tapes may be similar or superior to those of, e.g., steel-tapes.

The image sensor is arranged moveably along the tape and is configured for scanning the barcode. As used herein, the term "scanning" refers to an acquisition of one or more measurement values. For example, the measurement values are related to light and/or colors being emitted and/or reflected by a measurement object, such as the barcode. The image sensor may be arranged at a passenger transporting component of the passenger transportation system such as at the elevator car. For example, the image sensor is attached to the elevator car. The image sensor may typically be arranged such that the image sensor moves parallel to the tape along the tape and/or that the plurality of pixels is arranged opposite the barcode and/or facing the barcode.

The position measuring system according to this disclosure is configured for identifying a degree of coverage for an edge pixel and determining a relative position from the image sensor to the edge using the degree of coverage of the edge pixel. As used herein, the term "degree of coverage" refers to a degree that is derivable from the measurement value of a pixel and/or that is the measurement value of the pixel. The degree of coverage may relate to a brightness value. The degree of coverage of the edge pixel is neither substantially 100% nor substantially 0%. A degree of coverage of substantially 100% may typically be obtained from a pixel covering and/or scanning a dark bar, in particular a black bar while a degree of coverage of substantially 0% may typically be obtained from a pixel covering and/or scanning a light bar, in particular a white bar or *vice versa.* Hereinafter, for ease of explanation, a degree of coverage of substantially 100% refers to a dark bar. The edge pixel that is covering the edge is scanning at least partially both of the two bars being adjacent to each other and sharing the mutual edge that is covered by the edge pixel. This results in a degree of coverage, typically, between 0% and 100%. The edge pixel may have a lower degree of coverage than a pixel being adjacent to the edge pixel in a direction towards a dark bar. The edge pixel may have a higher degree of coverage than a pixel being adjacent to the edge pixel in a direction towards a light bar. The edge pixel may be determined for each scan of the image sensor.

The degree of coverage may be used to obtain the information at which height of the pixel height the edge is located. This specific height within the pixel height may split the pixel in two segments, a first segment covering the dark bar, a second segment covering the light bar. The degree of coverage corresponds typically and approximately the proportion that the first segment constitutes of the pixel height.

As already described, the degree of coverage is derivable from the measurement value of a pixel and/or is the measurement value of the pixel. In more detail, there may be an expected measurement value for a light bar and an expected measurement value for a dark bar that may be determined in an engineering phase. Edge pixels typically deliver a measurement value that lays between the expected measurement value for a light bar and the expected measurement value for a dark bar. This may lead to any measurement value between the expected measurement value for a light bar and the expected measurement value for a dark bar. Typically, a measurement value being closer to the expected measurement value for a dark bar means that the edge pixel covers more the dark bar than the light bar. This results in kind of a grey-scale that may be used to determine at which specific height of the pixel height the edge is located.

Sometimes, the image sensor may be more sensitive to light bars than to dark bars or *vice versa.* There are physical properties of the image sensor that may lead to a non-linear characteristic. For example, although an edge pixel may cover more the dark bar than the light bar, the measurement value delivered by the edge pixel may be closer to the expected measurement value of the light bar than to the expected measurement value of the dark bar due to a high sensitivity for light bars. Such a characteristic of the image sensor may be handled by using a non-linear approximation curve as described in more detail below.

The relative position is determined using the degree of coverage of the edge pixel. For example, a shift between an edge of the edge pixel and/or a center of the edge pixel to the edge of the bar may be determined using the degree of coverage. In some examples, the distance between the edge of the edge pixel and/or the center of the edge pixel and the reference point may be predetermined.

In embodiments, the absolute position may be determined by reading the barcode. The absolute position may be adjusted by using the relative position. Such embodiments may provide an increased accuracy in the determination of the absolute position. For example, the absolute position of the elevator car of an elevator system within a shaft of the elevator system may be accurately determined.

According to embodiments, at least two bars have a bar width which is a multiple of the pixel height. In such embodiments, the degree of coverage of a plurality of edge pixels may be determined. In particular, the degree of coverage of edge pixels which are located on a bottom side of the bars may be determined and/or the degree of coverage of edge pixels which are located on a top side of the bars may be determined. As used herein, the term "bottom side" refers to the side of the bar being located towards the first vertical end portion and the term "top side" refers to the side of the bar being located towards the second vertical end portion. The mean and/or median of the degree of coverage for top side edge pixels and/or for bottom side edge pixels may be determined. For example, the degrees of coverage of the top side edge pixels and the degrees of coverage of the bottom side edge pixels may be used to calibrate the image sensor. Such embodiments may reduce noise and increase the accuracy and robustness of the system.

In embodiments, at least two edge pixels may be identified and the relative position between the reference point and an edge may be determined using the degree of coverage of the at least two edge pixels. Such embodiments, in particular in combination with embodiments having at least two bars having a bar width which is a multiple of the pixel height, may reduce noise in accuracy of the system and/or may increase the accuracy in the determination of the position. For example, the relative position may be determined using the mean and/or median of the degree of coverage of edge pixels which are located on a bottom side of the bars and/or using the mean and/or median of the degree of coverage of edge pixels which are located on a top side of the bars.

The relative position between the image sensor and the edge may also or alternatively be determined by determining a relative position from the reference point to a first edge of a first bar using the degree of coverage of one of the at least two edge pixels, determining a relative position from the reference point to a second edge of a second bar using the degree of coverage of another of the at least two edge pixels and using a distance between the first edge and the second edge to obtain an averaged relative position between the reference point and the first edge and/or the second edge.

In embodiments, the barcode has a plurality of black bars and a plurality of white bars. A high contrast between two adjacent bars may provide an increased accuracy and robustness at the determination of the relative position. A "high contrast", as used herein, refers to a large difference between a measurement value of the image sensor measuring, e.g., the black bar and a measurement value of the image sensor measuring, e.g., the white bar. A high contrast may be sensor specific.

According to embodiments, the position measuring system is further configured for calibrating the image sensor using an intermediate pixel, in particular at least two intermediate pixels and preferably each of the intermediate pixels. As used herein, the term "intermediate pixel" refers to a pixel that has a degree of coverage of substantially 0% or of substantially 100% and/or that is located between two edges of a bar. Such embodiments may reduce noise in measurement and/or may increase the accuracy of the system in the determination of the position.

According to embodiments, the position measuring system may be configured for determining the relative position using a predefined approximation curve for the degree of coverage of the edge pixel. The predefined approximation curve may be linear or non-linear. The predefined approximation curve may be characteristically for a specific image sensor. As used herein, the term "curve" and/or "approximation curve" not necessarily refers to a curve. Rather, each method to determine an output from an input may be suitable for use, such as a table, a function or alike. The predefined approximation curve may be used to increase the accuracy and reliability in the determination of the position of the elevator car.

In embodiments, the image sensor may be configured to guide the tape. In particular, the image sensor may include a guide element to guide the tape. According to embodiments, the image sensor may include a housing to guide the tape, for example, the housing may include the guide element. The housing may include a recess for guiding the tape. The recess may be a guide element. In embodiments, a predetermined distance between surfaces of each of the plurality of pixels facing the barcode and the barcode may be provided. The predetermined distance may be less than 200 mm, in particular less than 100 mm, preferably less than 50 mm. In embodiments, the tape may be guided by the image sensor such that the predetermined distance is obtained. Such embodiments may facilitate the determination of the relative position from the image sensor to the edge. Further, the robustness and accuracy may be increased.

Reference now will be made in detail to embodiments of the disclosure, some examples of which are illustrated in the drawings. Each example may be provided by way of explanation of the disclosure, not limitation of the disclosure. For instance, features illustrated or described as part of embodiments may be used with other embodiments to yield still further embodiments. The drawings may not be true-to-scale.

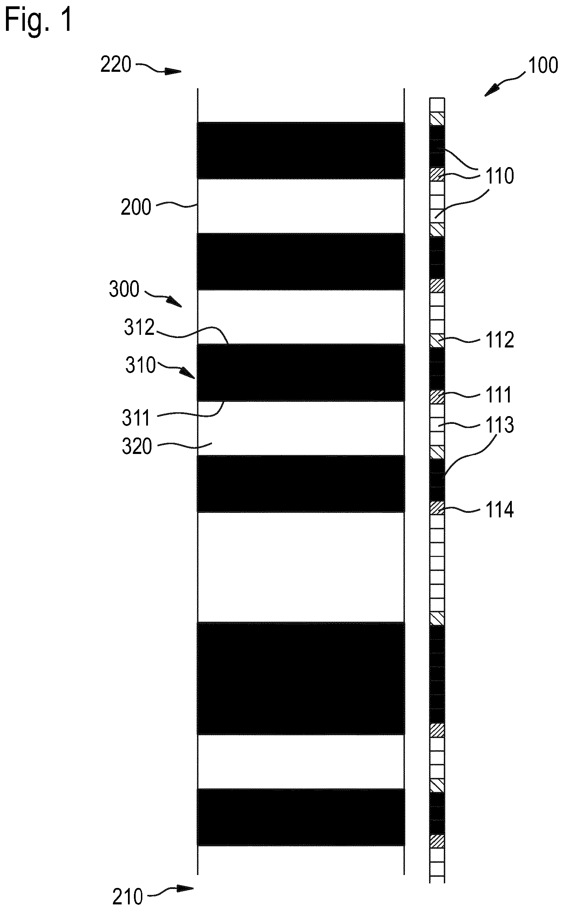

FIG. 1 shows schematically an image sensor 100 and a barcode 300 on a tape 200 being scanned by the image sensor 100. In FIG. 1, the image sensor 100 is illustrated as being arranged adjacent and parallel to the tape 200. According to FIG. 1, the image sensor 100 is embodied as a linear image sensor having a plurality of pixels 110 being arranged along a height direction in a 1 x n scheme. For example, the image sensor 100 may be a CMOS sensor.

The tape 200 may, e.g., be attached to a first vertical end portion 210 of a passenger transportation system and to a second vertical end portion 220 of the passenger transportation system. For example, the passenger transportation system is a vertical elevator system such that the tape 200 is vertically fixed within a shaft of the elevator system. The barcode 300 is printed on the tape 200. Any other technical solution to apply a barcode 300 on the tape could be used as well.

The barcode 300 includes a bar 310 extending lengthwise and having a lengthwise edge 311. The bar 310 has a bar width in the height direction and has a lengthwise second edge 312. The bar 310 is a dark bar, in particular a black bar. The bar 310 is located adjacent to a light bar 320. The light bar 320 has the edge 311 in common with the bar 310. The light bar 320 extends from the edge 311 by a bar width in a direction towards the first vertical end portion 210. The light bar 320 is shown in white color. A plurality of bars of the barcode 300 are arranged in a main extension direction of the tape 200 and/or the elevator system. The main extension direction of the tape is at least essentially perpendicular to the lengthwise edge 311 and the lengthwise second edge 312 of each bar 310. An extension direction of the bar width of the bar 310 corresponds substantially to an extension direction of a pixel height. The bar width is larger than the pixel height as it is illustrated in FIG. 1. According to the embodiment shown in FIG. 1, the bar width is a multiple of the pixel height. For example, the bar width corresponds substantially to four pixel heights.

The image sensor 100 is arranged moveably along the tape 200 and is configured for scanning the barcode 300 while being arranged on an elevator car. The image sensor 100 may include an integrated light source for illuminating the barcode 300. FIG. 1 illustrates schematically a scan of the barcode 300 by the image sensor 100.

Intermediate pixels 113 cover only one kind of a bar 310 (dark or light) while edge pixels 111 cover two bars of different kind (dark and light), e.g. they are not located entirely above a single bar 310, rather they cover an edge 311 or a second edge 312 such that they cover partially two bars of a different kind. Each scan provides a measurement value for each of the plurality of pixels 110. The measurement value may correspond to a measured brightness, color and/or alike. The measurement value can be used to determine a degree of coverage. The intermediate pixels 113 have a degree of coverage of substantially 100% or of substantially 0%, thus, they cover, e.g., the bar 310, 320 entirely or not at all. The edge pixel 111 has a degree of coverage of neither substantially 100% nor of substantially 0%. Rather, the edge pixel 111 has a degree of coverage between 0% and 100%.

The degree of coverage of the edge pixel 111 can be used to determine a relative position from the image sensor 100 to the edge 311. For example, a vertical distance between a reference point of the image sensor 100 and a center of the edge pixel 111 is known. The reference point may lay, e.g., on a lowermost end of a lowermost pixel (not shown) of the plurality of pixels 110, or on any other point of the image sensor 100. In case the degree of coverage of the edge pixel 111 is 50%, i.e. the extension of the edge pixel 111 in the vertical direction covers half the bar 310 and half the light bar 320 being adjacent to the bar 310, the relative position from the reference point to the edge 311 corresponds substantially to the vertical distance between the reference point of the image sensor 100 and the center of the edge pixel 111.

For example, the degree of coverage of the edge pixel 111 is, as schematically illustrated in FIG. 1, 75%, i.e. the extension of the edge pixel 111 in the vertical direction covers three quarters of the bar 310 and one quarter the light bar 320, the relative position from the reference point to the edge 311 corresponds substantially to the vertical distance between the reference point of the image sensor 100 and the center of the edge pixel 111 adjusted by a shift of a quarter of the vertical extension of the edge pixel 111. An algebraic sign for the shift is determined by a position of the reference point.

According to the embodiment shown in FIG. 1, a second edge pixel 112 being located at the second edge 312 has a degree of coverage of 25%. In embodiments having bar widths being a multiple of the pixel height the degree of coverage of the edge pixel 111 and the second edge pixel 112 sum to 100%. Further edge pixels being arranged at a bottom side of the plurality of bars have also substantially the degree of coverage of the edge pixel 111. Further edge pixels being arranged at a top side of the plurality of bars have also substantially the degree of coverage of the second edge pixel 112.

A calibration of the image sensor 100 may be executed by using at least two intermediate pixels 113, preferably each of the intermediate pixels 113. The intermediate pixels 113 may be calibrated to have a degree of coverage of either 100% or 0%. The calibration of the image sensor 100 may also be executed by using at least two edge pixels, preferably each of the edge pixels. The top side edge pixels may be calibrated to have a mean or median degree of coverage of the at least two top side edge pixels, the bottom side edge pixels may be calibrated to have a mean or median degree of coverage of the at least two bottom side edge pixels.

The degree of coverage of the edge pixel 111 may be determined by using the degree of coverage of at least two edge pixels. For example, in case the edge pixel has a degree of coverage of 73% and another bottom side edge pixel, such as a third edge pixel 114, has a degree of coverage of 77%, the degree of coverage of the edge pixel 111 and/or of the third edge pixel 114 may be determined to be 75%.

The embodiment shown in FIG. 1 is configured for determining an absolute position by reading the barcode 300 and adjusting the absolute position by using the relative position. For example, the degree of coverage of the plurality of pixels 110 of the image sensor 100, preferably of substantially each of the pixels of the image sensor 100, is determined. The barcode 300 can be read, e.g., using the degree of coverage of the plurality of pixels 110 of the image sensor 100.

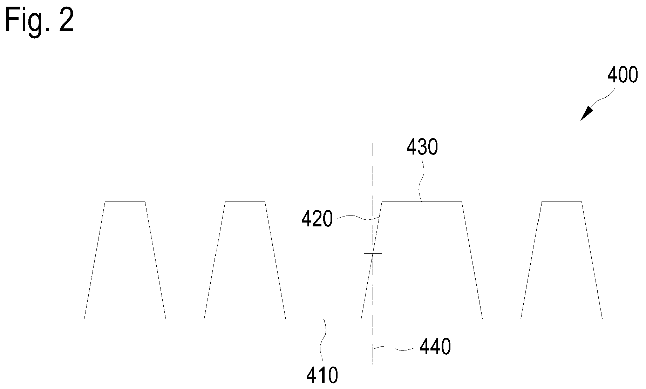

FIG. 2 shows schematically an output signal of a pixel of an image sensor 100 scanning a code of dark areas and light areas, e.g., while moving along a tape 200 with the code of dark areas and light areas according to embodiments of this disclosure. The code of dark areas and light areas is a barcode 300. The image sensor 100 moves at a constant speed along the tape 200.

A bottom level signal 410 is obtained when the pixel crosses, e.g., a white bar. A top level signal 430 is obtained when the pixel crosses, e.g., a black bar. At the transition between the white bar and the black bar the pixel is crossing an edge 311 such that a transition signal 420 is obtained and that the pixel is considered to be an edge pixel 111. The transition signal 420 is substantially linear such that a degree of coverage may be determined with a linear approximation. In embodiments, the transition signal 420 may be non-linear due to, e.g., physical properties of the image sensor 100. In such embodiments, a degree of coverage may be determined using a non-linear approximation curve.

When a relative position is to be determined at time 440 the pixel is an edge pixel 111. As it can be seen in FIG. 2, the output signal delivers at time 440 an output being substantially an average between the top level signal 430 and the bottom level signal 410. The output at time 440 is used to identify the degree of coverage. The degree of coverage is 50% at time 440. Thus, the edge pixel 111 is covering half the white bar and half the black bar at time 440.

In one or more examples, the functions described may be implemented in hardware, software, firmware, or any combination thereof. If implemented in software, the functions may be stored as one or more instructions or code on a computer-readable medium and executed by a hardware-based processing unit. Computer-readable media may include computer-readable storage media, which corresponds to a tangible medium such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein.

Thus, a position measuring system for a passenger transportation system, a method for determining a position of an elevator car and a passenger transportation system with such a position measuring system have been presented in the foregoing description with reference to specific examples. It is to be understood that various aspects disclosed herein may be combined in different combinations than the specific combinations presented in the accompanying drawings within the scope of the appended claims. It is appreciated that various modifications to the referenced examples may be made without departing from the scope of the disclosure and the following claims.

## Claims

1. A method for determining an absolute position of an elevator car of an elevator system using an image sensor (100) having a plurality of pixels (110) being arranged along a height direction and each pixel of the plurality of pixels (110) having a pixel height, and a barcode (300) having a bar (310) extending lengthwise, perpendicular to the height direction, and having a lengthwise edge (311), the bar having a bar width in the height direction, the bar width being larger than the pixel height, the method comprising the steps:
scanning the barcode (300) by the image sensor (100);
**characterized by**
identifying a degree of coverage for an edge pixel (111) of the plurality of pixels (110), the lengthwise edge (311) of the bar being imaged onto the edge pixel (111); and
determining a relative position from the image sensor (100) to the lengthwise edge (311) of the bar by using the degree of coverage of the edge pixel (111).

2. The method of claim 1, wherein the absolute position is determined by reading the barcode (300) and wherein the absolute position is adjusted using the relative position.

3. The method of any of the preceding claims, wherein the barcode comprises at least a further bar, which further bar forms together with the bar the bars of the barcode, each bar of the bars comprise a bar width which is a multiple of the pixel height.

4. The method of any of the preceding claims, wherein the barcode (300) comprises a plurality of dark bars and a plurality of light bars.

5. The method of any of the preceding claims, wherein the method further comprises the step of calibrating the image sensor (100) using an intermediate pixel (113) of the plurality of pixels, preferably at least two of the intermediate pixels, particularly preferably each of the intermediate pixels, wherein the intermediate pixel covers only one kind of a bar.

6. The method of any of the preceding claims, wherein at least two edge pixels are identified and the relative position is determined using the degree of coverage of the at least two edge pixels, in particular wherein the relative position is determined using the mean and/or median of the degree of coverage of the at least two edge pixels.

7. The method of any of the preceding claims, wherein the relative position is determined using a predefined approximation curve (410) for the degree of coverage of the edge pixel (111); and wherein the predefined approximation curve (410) is linear or wherein the predefined approximation curve (410) is non-linear.

8. An absolute position measuring system for determining an absolute position of an elevator car of an elevator system, in particular for a passenger elevator system, comprising
an image sensor (100) having a plurality of pixels (110) being arranged in a height direction and each pixel of the plurality of pixels having a pixel height; and
a tape (200) having a barcode (300) with a bar (310) extending lengthwise, perpendicular to the height direction, and having a lengthwise edge (311), the bar having a bar width in the height direction, the bar width being larger than the pixel height;
wherein the image sensor (100) is suitable to be arranged on the car and movably along the tape (200) and is configured for scanning the barcode (300);
**characterized in that**, the position measuring system is configured for identifying a degree of coverage for an edge pixel (111) of the plurality of pixels (110), the lengthwise edge (311) of the bar being imaged onto the edge pixel (111); and for determining a relative position from the image sensor (100) to the lengthwise edge (311) of the bar using the degree of coverage of the edge pixel.

9. The position measuring system of claim 8, wherein the position measuring system is further configured for determining the absolute position by reading the barcode (300) and adjusting the absolute position by using the relative position.

10. The position measuring system of any of claims 8 or 9, wherein the bar widths are always a multiple of the pixel height and/or wherein the barcode (300) comprises a plurality of dark bars and a plurality of light bars.

11. The position measuring system of any of claims 8-10, wherein the position measuring system is further configured for calibrating the image sensor (100) by using an intermediate pixel (113) of the plurality of pixels, preferably at least two intermediate pixels, particularly preferably each of the intermediate pixels, wherein the intermediate pixel covers only one kind of a bar.

12. The position measuring system of any of claims 8-11, wherein the position measuring system is configured for identifying at least two edge pixels; and for determining the relative position by using the degree of coverage of the at least two edge pixels, in particular by using the mean and/or median of the degree of coverage of the at least two edge pixels.

13. The position measuring system of any of claims 8-12, wherein the position measuring system is configured for determining the relative position using a predefined approximation curve (410) for the degree of coverage of the edge pixel (111); and wherein the predefined approximation curve (410) is linear or wherein the predefined approximation curve (410) is non-linear.

14. The position measuring system of any of claims 8-13, wherein the image sensor (100) guides the tape (200).

15. The position measuring system of any of claims 8-14, wherein the tape (200) is made substantially of polyethylene terephthalate [PET].

16. An elevator system, in particular a passenger elevator system, comprising the absolute position measuring system of any of claims 8-15.

## Patentansprüche

1. Verfahren zur Bestimmung einer absoluten Position einer Aufzugskabine eines Aufzugssystems unter Verwendung eines Bildsensors (100) mit einer Vielzahl von Pixeln (110), die entlang einer Höhenrichtung angeordnet sind und wobei jedes Pixel der Vielzahl von Pixeln (110) eine Pixelhöhe aufweist, sowie eines Strichcodes (300) mit einem Strich (310), der sich in Längsrichtung senkrecht zur Höhenrichtung erstreckt und eine Längskante (311) aufweist, wobei der Strich eine Strichbreite in Höhenrichtung aufweist und die Strichbreite größer ist als die Pixelhöhe, wobei das Verfahren die folgenden Schritte umfasst:
Abtasten des Strichcodes (300) durch den Bildsensor (100);
**gekennzeichnet durch**
Ermitteln eines Abdeckungsgrades für ein Randpixel (111) der Vielzahl von Pixeln (110), wobei die Längskante (311) des Strichs auf das Randpixel (111) abgebildet wird; und
Bestimmen einer relativen Position vom Bildsensor (100) zur Längskante (311) des Strichs unter Verwendung des Überdeckungsgrades des Randpixels (111).

2. Verfahren nach Anspruch 1, wobei die absolute Position durch das Einlesen des Strichcodes (300) ermittelt wird und wobei die absolute Position unter Verwendung der relativen Position angepasst wird.

3. Verfahren nach einem der vorstehenden Ansprüche, wobei der Barcode mindestens einen weiteren Strich umfasst, wobei dieser weitere Strich zusammen mit dem Strich die Striche des Barcodes bildet, wobei jeder der Striche eine Strichbreite aufweist, die ein Vielfaches der Pixelhöhe ist.

4. Verfahren nach einem der vorstehenden Ansprüche, wobei der Barcode (300) eine
Vielzahl von dunklen Balken und eine Vielzahl von hellen Balken umfasst.

5. Verfahren nach einem der vorstehenden Ansprüche, wobei das Verfahren ferner den Schritt des Kalibrierens des Bildsensors (100) unter Verwendung eines Zwischenpixels (113) aus der Vielzahl von Pixeln umfasst, vorzugsweise mindestens zweier der Zwischenpixel, besonders bevorzugt jedes der Zwischenpixel, wobei das Zwischenpixel nur eine Art von Strich abdeckt.

6. Verfahren nach einem der vorstehenden Ansprüche, wobei mindestens zwei Randpixel identifiziert werden und die relative Position anhand des Abdeckungsgrades der mindestens zwei Randpixel bestimmt wird, insbesondere wobei die relative Position anhand des Mittelwerts und/oder des Medians des Abdeckungsgrades der mindestens zwei Randpixel bestimmt wird.

7. Verfahren nach einem der vorstehenden Ansprüche, wobei die relative Position unter Verwendung einer vordefinierten Näherungskurve (410) für den Überdeckungsgrad des Randpixels (111) bestimmt wird; und wobei die vordefinierte Näherungskurve (410) linear ist oder wobei die vordefinierte Näherungskurve (410) nichtlinear ist.

8. Ein System zur Messung der absoluten Position zur Bestimmung einer absoluten Position einer Aufzugskabine eines Aufzugssystems, insbesondere für ein Personenaufzugssystem, umfassend
einen Bildsensor (100) mit einer Vielzahl von Pixeln (110), die in einer Höhenrichtung angeordnet sind, wobei jedes Pixel der Vielzahl von Pixeln eine Pixelhöhe aufweist; und
ein Band (200) mit einem Strichcode (300), der einen sich in Längsrichtung, senkrecht zur Höhenrichtung, erstreckenden Strich (310) und eine Längskante (311) aufweist, wobei der Strich eine Strichbreite in der Höhenrichtung aufweist und die Strichbreite größer ist als die Pixelhöhe;
wobei der Bildsensor (100) dazu geeignet ist, am Fahrzeug und beweglich entlang des Bandes (200) angeordnet zu werden, und zum Abtasten des Strichcodes (300) ausgelegt ist;
**dadurch gekennzeichnet, dass** das Positionsmesssystem dazu ausgelegt ist, einen Abdeckungsgrad für ein Randpixel (111) der Vielzahl von Pixeln (110) zu ermitteln, wobei die Längskante (311) des Strichs auf das Randpixel (111) abgebildet wird; und dazu ausgelegt ist, anhand des Überdeckungsgrades des Randpixels eine relative Position des Bildsensors (100) zur Längskante (311) des Strichs zu bestimmen.

9. Positionsmesssystem nach Anspruch 8, wobei das Positionsmesssystem ferner dazu ausgelegt ist, die absolute Position durch Auslesen des Barcodes (300) zu ermitteln und die absolute Position unter Verwendung der relativen Position anzupassen.

10. Positionsmesssystem nach einem der Ansprüche 8 oder 9, wobei die Strichbreiten stets ein Vielfaches der Pixelhöhe betragen und/oder wobei der Barcode (300) eine Vielzahl von dunklen Strichen und eine Vielzahl von hellen Strichen umfasst.

11. Positionsmesssystem nach einem der Ansprüche 8 bis 10, wobei das Positionsmesssystem ferner dazu ausgelegt ist, den Bildsensor (100) unter Verwendung eines Zwischenpixels (113) aus der Vielzahl von Pixeln, vorzugsweise mindestens zweier Zwischenpixel, besonders bevorzugt jedes der Zwischenpixel, zu kalibrieren, wobei das Zwischenpixel nur eine Art von Strich abdeckt.

12. Positionsmesssystem nach einem der Ansprüche 8 bis 11, wobei das Positionsmesssystem dazu ausgelegt ist, mindestens zwei Randpixel zu identifizieren; und die relative Position unter Verwendung des Abdeckungsgrades der mindestens zwei Randpixel zu bestimmen, insbesondere unter Verwendung des Mittelwerts und/oder des Medians des Abdeckungsgrades der mindestens zwei Randpixel.

13. Positionsmesssystem nach einem der Ansprüche 8 bis 12, wobei das Positionsmesssystem dazu ausgelegt ist, die relative Position unter Verwendung einer vordefinierten Näherungskurve (410) für den Abdeckungsgrad des Randpixels (111) zu bestimmen; und wobei die vordefinierte Näherungskurve (410) linear ist oder wobei die vordefinierte Näherungskurve (410) nichtlinear ist.

14. Positionsmesssystem nach einem der Ansprüche 8 bis 13, wobei der Bildsensor (100) das Band (200) führt.

15. Positionsmesssystem nach einem der Ansprüche 8 bis 14, wobei das Band (200) im Wesentlichen aus Polyethylenterephthalat [PET] besteht.

16. Aufzugssystem, insbesondere Personenaufzugssystem, das das absolute Positionsmesssystem nach einem der Ansprüche 8 bis 15 umfasst.

## Revendications

1. Procédé permettant de déterminer la position absolue d'une cabine d'ascenseur d'un système d'ascenseur à l'aide d'un capteur d'image (100) comportant une pluralité de pixels (110) disposés selon une direction de hauteur, chaque pixel de ladite pluralité de pixels (110) ayant une hauteur de pixel, et d'un code-barres (300) comportant une barre (310) s'étendant dans le sens de la longueur, perpendiculairement à la direction de la hauteur, et comportant un bord longitudinal (311), la barre ayant une largeur de barre dans la direction de la hauteur, ladite largeur de barre étant supérieure à la hauteur de pixel, le procédé comprenant les étapes suivantes :
la lecture du code-barres (300) par le capteur d'image (100) ;
**caractérisé par**
l'identification d'un degré de couverture pour un pixel de bord (111) de la pluralité de pixels (110), le bord longitudinal (311) de la barre étant représenté sur le pixel de bord (111) ; et
déterminer une position relative entre le capteur d'image (100) et le bord longitudinal (311) de la barre en utilisant le degré de recouvrement du pixel de bord (111).

2. Procédé selon la revendication 1, dans lequel la position absolue est déterminée par la lecture du code-barres (300) et dans lequel la position absolue est ajustée à l'aide de la position relative.

3. Procédé selon l'une quelconque des revendications précédentes, dans lequel le code-barres comprend au moins une barre supplémentaire, laquelle barre supplémentaire forme, conjointement avec la barre, les barres du code-barres, chaque barre parmi lesdites barres présentant une largeur de barre qui est un multiple de la hauteur du pixel.

4. Procédé selon l'une quelconque des revendications précédentes, dans lequel le code-barres (300) comprend une pluralité de barres sombres et une pluralité de barres claires.

5. Procédé selon l'une quelconque des revendications précédentes, dans laquelle le procédé comprend en outre l'étape consistant à étalonner le capteur d'image (100) à l'aide d'un pixel intermédiaire (113) parmi la pluralité de pixels de l' , de préférence au moins deux des pixels intermédiaires, de manière particulièrement préférée chacun des pixels intermédiaires, le pixel intermédiaire ne couvrant qu'un seul type de barre.

6. Procédé selon l'une quelconque des revendications précédentes, dans lequel au moins deux pixels de bord sont identifiés et la position relative est déterminée à l'aide du degré de couverture desdits au moins deux pixels de bord, en particulier dans lequel la position relative est déterminée à l'aide de la moyenne et/ou de la médiane du degré de couverture desdits au moins deux pixels de bord.

7. Procédé selon l'une quelconque des revendications précédentes, dans lequel la position relative est déterminée à l'aide d'une courbe d'approximation prédéfinie (410) pour le degré de couverture du pixel de bord (111) ; et dans lequel la courbe d'approximation prédéfinie (410) est linéaire ou dans lequel la courbe d'approximation prédéfinie (410) est non linéaire.

8. Système de mesure de position absolue destiné à déterminer une position absolue d'une cabine d'ascenseur d'un système d'ascenseur, en particulier pour un système d'ascenseur de personnes, comprenant
un capteur d'image (100) comportant une pluralité de pixels (110) disposés dans une direction de hauteur, chaque pixel de ladite pluralité de pixels ayant une hauteur de pixel ; et
une bande (200) comportant un code-barres (300) avec une barre (310) s'étendant dans le sens de la longueur, perpendiculairement à la direction de la hauteur, et comportant un bord longitudinal (311), la barre ayant une largeur de barre dans la direction de la hauteur, la largeur de barre étant supérieure à la hauteur de pixel ;
dans lequel le capteur d'image (100) est adapté pour être disposé sur la voiture et de manière mobile le long de la bande (200), et est configuré pour balayer le code-barres (300) ;
**caractérisé en ce que** le système de mesure de position est configuré pour identifier un degré de couverture d'un pixel de bord (111) parmi la pluralité de pixels (110), le bord longitudinal (311) de la barre étant représenté sur le pixel de bord (111) ; et pour déterminer une position relative entre le capteur d'image (100) et le bord longitudinal (311) du code-barres à l'aide du degré de couverture du pixel de bord.

9. Système de mesure de position selon la revendication 8, dans lequel le système de mesure de position est en outre configuré pour déterminer la position absolue en lisant le code-barres (300) et pour ajuster la position absolue à l'aide de la position relative.

10. Système de mesure de position selon l'une quelconque des revendications 8 ou 9, dans lequel les largeurs des barres sont toujours un multiple de la hauteur des pixels et/ou dans lequel le code-barres (300) comprend une pluralité de barres sombres et une pluralité de barres claires.

11. Système de mesure de position selon l'une quelconque des revendications 8 à 10, dans lequel le système de mesure de position est en outre configuré pour étalonner le capteur d'image (100) à l'aide d'un pixel intermédiaire (113) parmi la pluralité de pixels, de préférence au moins deux pixels intermédiaires, de manière particulièrement préférée chacun des pixels intermédiaires, le pixel intermédiaire ne couvrant qu'un seul type de barre.

12. Système de mesure de position selon l'une quelconque des revendications 8 à 11, dans lequel le système de mesure de position est configuré pour identifier au moins deux pixels de bord ; et pour déterminer la position relative à l'aide du degré de couverture desdits au moins deux pixels de bord, en particulier à l'aide de la moyenne et/ou de la médiane du degré de couverture desdits au moins deux pixels de bord.

13. Système de mesure de position selon l'une quelconque des revendications 8 à 12, dans lequel le système de mesure de position est configuré pour déterminer la position relative à l'aide d'une courbe d'approximation prédéfinie (410) pour le degré de couverture du pixel de bord (111) ; et dans lequel la courbe d'approximation prédéfinie (410) est linéaire ou dans lequel la courbe d'approximation prédéfinie (410) est non linéaire.

14. Système de mesure de position selon l'une quelconque des revendications 8 à 13, dans lequel le capteur d'image (100) guide le ruban (200).

15. Système de mesure de position selon l'une quelconque des revendications 8 à 14, dans lequel le ruban (200) est constitué essentiellement de polyéthylène téréphtalate [PET].

16. Système d'ascenseur, en particulier système d'ascenseur de personnes, comprenant le système de mesure de position absolue selon l'une quelconque des revendications 8 à 15.
